# EUROPEAN PATENT SPECIFICATION

(11) **EP 2 055 199 B1**
(45) Date of publication and mention of the grant of the patent: **31.07.2013**
(21) Application number: 07254268.1
(22) Date of filing: 29.10.2007
(51) Int. Cl.: A23L 1/24, A23L 1/30

(54) **Dressing composition**
Verbandzusammensetzung
Composition d'assaisonnement

(43) Date of publication of application: 06.05.2009
(73) Proprietor: Stepan Specialty Products, LLC, Wilmington, DE (US)
(72) Inventor: Mulder, Ellen Maria Elizabeth, 1521 AZ Wormerveer (NL); Van Wanroij, Miriam Aldegonda Josephina, 1521 AZ Wormerveer (NL); Schmid, Ulrike, 1521 AZ Wormerveer (NL)
(74) Representative: Bassett, Richard Simon

(56) References cited:
- EP-A- 0 954 975
- EP-A- 1 493 440
- WO-A-2005/052102
- ES-A1- 2 258 928
- US-A- 6 034 132

## Description

This invention relates to a dressing composition and to a process for its production.

A dressing is a sauce often used to accompany a salad. Dressings are often emulsion formed from an aqueous phase and a fat phase. Examples of dressings include vinaigrette and mayonnaise. A dressing in the form of an emulsion, can be prepared so that the phases separate out, or remain emulsified, for example through the use of emulsifiers. Dressings can be oil-in-water emulsions or water in-oil emulsions.

The nutritional value of the diet has come under inereasing scrutiny. Food supplements are often taken by individuals in order to obtain nutritional benefits. However, food supplements are typically in the form of capsule or the like and have the disadvantage that they are inconvenient in that individual has to remember to take them. Food supplements of this type are typically not flavoured and are not attractive to many consumers.

Nutritional supplements have been incorporated into food products but the resulting food products can have an undesirable taste and the incorporation of the supplement can have a deleterious effect on the stability of the products.

Conjugated linoleic acid (CLA) is a conjugated dienoic fatty acid having 18 carbon atoms. As a result of the presence of the two double bonds in CLA, geometrical isomerism is possible and the CLA molecule or moiety may exist in a number of isomeric forms. The cis9, trans11 ("c9t11") and trans10, cis12 ("t10c12") isomers of CLA are generally the most abundant and beneficial pharmacological effects have been identified for each of these isomers.

US 6,468,556 discloses the administration of CLA for inhibiting liver fat accumulation. However, this document is not concerned with the stability of its formulations or whether they have an acceptable taste and texture.

US 7,115,759 and US 6,608,222 disclose the production of CLA and its incorporation into various prepared food products. Neither document is concerned with solving the problems that occur when CLA is formulated into a food product or how these might be overcome.

ES 2 258 928 discloses blends of CLA and vegetable oils for use in cooking.

WO 00/21379 relates to food substances based on substances derived from milk, which contain isomers of CLA.

WO 2005/052102 discloses an oil composition based on a diglyceride of CLA resulting from an enzymatic reaction.

BP-A-1618800 relates to compositions containing extracts of tomatoes. CLA may be included in the tomato extract.

EP 1 493 440 discloses the prevention or treatment of hypertension using conjugated fatty acids such as CLA.

WO 97/18320 discloses the preparation of a Ranch dressing comprising an inter-esterification product of sunflower oil and an oil containing CLA.

There remains a need for food products containing CLA that can have a low energy content (i.e., are low calorie) but still have good organoleptic properties such as taste and mouthfeel. We have now found certain compositions that solve these problems.

According to one aspect of the invention, there is provided a dressing composition comprising a fat phase, said fat phase comprising at least 90% by weight conjugated linoleic acid or a derivative thereof (CLA), and wherein the dressing composition comprises from 15 to 60% by weight fat.

Preferably, the fat phase comprises at least 95% by weight CLA.

Advantageously, the dressing composition comprises from 15 to 45% by weight

Preferably, the dressing composition comprises form 15 to 30% by weight fat.

Conveniently, the dressing composition is selected from the group consisting of Ranch dressing, Italian dressing, blue cheese dressing, Thousand Island dressing and French dressing.

Advantageously, the dressing composition is a Ranch dressing or an Italian dressing.

Conveniently, the dressing comprises vinegar.

Advantageously, the vinegar is balsamic vinegar.

Preferably, the dressing composition comprises from 2 to 55% by weight vinegar.

Conveniently, the dressing further comptises a dairy based product.

Advantageously, the dairy based product is yoghurt.

Preferably, the dairy based product is buttermilk.

Conveniently, the dressing comprises mayonnaise.

Advantageously, the dressing composition comprises a sweetener.

Preferably, the dressing composition comprises one or more additives selected from flavours, colouring agents, vitamins, acidity regulators, preservalives, emulsifiers, thickeners, antioxidants, dietary fibres and mixtures thereof.

Conveniently, the conjugated linoleic acid or a derivative thereof (CLA) is incorporated in the dressing composition in the form of a powder.

According to another aspect of the invention, there is provided a process for producing a dressing composition of the invention, which comprises admixing a fat phase which comprises at least 90% by weight conjugated linoleic acid or a derivative thereof (CLA), with an aqueous phase to give the dressing composition.

Preferably, the process further comprises the step of forming an emulsion of the fat phase with the aqueous phase.

Conveniently, the conjugated linoleic acid or a derivative thereof (CLA) is incorporated into the dressing composition in the form of a powder.

Advantageously, the powder is produced by spray drying the conjugated linoleic acid or its derivatives (CLA), or a fat comprising conjugated linoleic acid or its derivatives (CLA), with protein and/or carbohydrate.

According to a yet further aspect of the invention, there is provided a use of a dressing composition of the invention for a nutritional benefit.

According to another aspect of the invention, there is provided a dressing composition for use to give a weight management effect

According to a further aspect of the invention, there is provided a dressing composition for use to give a reduced tendency to fluctuation of body weight. According to another aspect of the invention, there is provided a dressing composition for use in the prevention or treatment of atherosclerosis.
The dressing compositions of the invention have good mouthfeel. They have a long shelf-life, with texture, appearance and colour remaining good.

Optionally, the dressing may comprise a flavouring substance. Flavouring substances may be used singly or in combination and include natural and artificial flavouring agents.

Sucrose, glucose and fructose may be specifically added or may be present as part of another component of the dressing. The dressing may comprise a sugar replacer and/or a sweeteetener.

Examples of suitable sweeteners are saccharin, aspartame, sucralose, neotame and acesulfame potassium, acesulfame, taumatine, cyclamate, and mixtures thereof. Preferred sweeteners are those selected from espartame, acesulfame, sucralose and mixtures thereof.

Sugar replacers include, for example, sorbitol, mannitol, isomaltitol, xylitol, isomalt, lactitol, hydrogenated starch hydrolysates (HSH, including maltitol syrups) and mixtures thereof

The dressing composition may comprise a dairy based product, such as yoghurt aud/or buttermilk

The dressing may additionally comprise a source of dietary fibre. Dietary fibres are complex carbohydrates resistant to digestion by mammalian enzymes, such as the carbohydrates found in plant cell walls and seaweed, and those produced by microbial fermentation.

Dressings of the invention optionally comprise one or more additional additives selected from colouring agents, vitamins, minerals, acidity regulators, preservatives, emulsifiers, antioxidants and mixtures thereof. Bach of these materials may be a single component or a mixture of two or more components.

Examples of suitable vitamins and minerals include calcium, iron, zinc, copper, phosphorous, biotin, folic arid, pantothenic acid, iodine, vitamin A, vitamin C, vitamin B1, vitamin B2, vitmin B3, vitamin B6, vitamin B9, vitamin B12, vitamin D, vitamin E, and vitamin K. Preferably, when a vitamin or mineral is utilized the vitamin or mineral is selected from iron, zinc, folic acoid, iodine, vitamin A, vitamin C, vitamin B2, vitamin B3, vitamin B6, vitamin B12, vitamin D, and vitamin E.

Acidity regulators include organic as well as inorganic edible acids. The acids can be added or be present in their undissoriated form or, alternatively, as their respective salts, for example, potassium or sodium hydrogen phosphate, potassium or sodium dihydrogen phosphate salts. The preferred acids are edible organic acids which include citric acid, malic acid, fumaric acid, adipic acid, phosphoric acid, gluconic acid, tartaric acid, ascorbic acid, acetic acid, phosphoric acid, or mixtures thereof. Glucono Delta Lactone (GDL) may also be used, particularly wherein it is desired to reduce pH without introducing excessive acidic, or tart, flavour in the final composition. Citrc acid is particularly useful.

Colouring agents including natural and artificial colours may optionally be used. Non-limiting examples of colouring agents include colours present in vegetable juices, riboflavin, carotenoids (e.g. p-carotene), tumeric, and lycopenes. However, the dressing of the invention may be free of extracts from tomato.

Preservatives may be selected from the group consisting of sorbate preservatives, benzoate preservatives, and mixtures thereof.

Emulsifiers may be selected. from the group consisting of egg yolk and components thereof, such as lecithin, mustard, mono- and di-glycerides and derivatives thereof and fatty acid esters, and mixtures thereof.

Antioxidants include, for example, natural or synthetic tocopherols, TBHQ, BHT, BHA, free radical scavengers, propylgallate, ascorbylesters of fatty acids and enzymes with anti-oxidant properties.

The dressing compositions of the invention may comprise one or more liquid oils, including vegetable oils such as olive oil, virgin olive oil, native olive oil and peanut oil. As used herein, the term "liquid oil" is meant to refer to fats that are liquid at room temperature, i.e. at about 25°C.

The fat phase in the dressing of the invention comprises at least 90% by weight, more preferably at least 95% by weight, even more preferably at least 98% by weight, and most preferably at least 99% by weight of the fat phase of conjugated linoleic acid or a derivative thereof (CLA). The upper limit of CLA in the fat phase may be 95% or 100% by weight. The amount of CLA in the fat phase is based on the total weight of fatty acids in the fat (calculated using fatty acid methyl ester analysis). The term "CLA", as used herein refers to conjugated linoleic acid and its derivatives. The CLA may be used in the form of the free acid. Derivatives of conjugated fatty acids include salts and esters thereof, or a mixture of two or more of these materials. Salts are non-toxic, pharmaceutically acceptable and/or acceptable for use in food products and/or pharmaceuticals and include, for example, salts with alkali metals and alkaine earth metals such as sodium, calcium and magnesium, preferably sodium. Esters include, for example, mono-, di- and tri- glycerides and mixtures thereof, and C1 to C6 alkyl esters (where the alkyl group can be straight chain or branched), as well as esters formed with alcohols that are acceptable in food products or pharmaceutical products, such as are disclosed in EP-A-1167340, the contents of which are incorporated by reference herein. Suitable alcohols include terpene alcohols or sesquiterpene alcohols, for example menthol, isopulegol, menthenol, carveol, carvomenthenol, carvomenthol, isobornylalcohol, caryophyllenealcohol geraniol, farnesol and citronellol.

The preferred form of CLA for use in the invention is as a glyceride. Particularly preferred are diglycerides and triglycerides, with triglycerides being even more preferred.

The CLA may comprise one isomer or a mixture of two or more different isomers including: cis, cis; cis, trans; trans, cis; and trans, trans isomers. Preferred isomers are the traus10, cis12 and cis9, trans 11 isomers (also referred to herein as t10c12 and c911l, respectively), including these isomers in relatively pure form, as well as mixtures with each other and/or mixtures with other isomers. Typically, the fat phase of the dressing will comprise at least 20% by weight of the c9t11 isomer and/or at least 20% by weight of the t10c12 isomer. More preferably, the conjugated linoleic acid or derivative thereof comprises trans10, cis12 and cis9, trans11 isomers and the weight ratio of trans10, cis12 isomer to cis9, trans11 isomer or vice versa is at least 1.2:1, such as 1.3:1, even more preferably at least 1.5:1, e.g., in the range 1.5:1 to 100:1 or 1.5:1 to 10:1, such as a 60:40 or 80:20 mixture of the trans10, cis12: cis9, trans11 isomers. Particularly preferred are compositions comprising the trans10, cis 12 isomer or the cis9, trans 11 isomer as the major isomer component i.e., present in an amount of at least 55 %, preferably at least 60 %, more preferably at least 70 %, even more preferably at least 75 %, most preferably at least 80 %, such as at least 90 % or even 100 % by weight based on the total amount of conjugated linoleic acid. For example, the CLA may comprise c9t11 and t10c12 isomers and the weight ratio of the c9t11 to t10c12 isomers may be from 99:1 to 1 to 99, preferably from 90:10 to 10:90 most preferably from 90:20 to 20:80.

CLA can be produced in conventional ways. For example, CLA can be produced by known methods, such as that described in EP-A-902082, the contents of which are incorporated herein by reference. CLA products that are enriched in one or more isomers are disclosed in WO 97/18320, the contents of which are also incorporated herein by reference.

The CLA is optionally blended with additional fatty acids or glycerides before being used in the fat of the present invention. When the compositions contain one or more fatty acids and/or glycerides in addition to the CLA, the additional fatty acid(s) and/or glycerides are preferably selected from liquid oils, such as soybean oil, sunflower oil, olive oil, flax seed oil rape seed oil and cotton seed oil; enzymically made fats; fish oils and factions thereof; gamma linolenic acid and enriched mixtures thereof, and mixtures thereof; pinolenic acid, arachadonic acid and EPA (eicosapentaenoic) and DHA (docosahexaenoic). These other fatty acids may be present as free acids or derivatives in the same way as CLA and are preferably present as glycerides, more preferably tiglycerides.

The CLA can be included in the dressing of the invention as an oil or in the form of a powder, such as a free flowing powder. CLA and its derivatives in powder form can be produced, for example, by spray drying CLA, or a fat comprising CLA, with protein and/or carbohydrate, with the powder typically comprising from 50 to 95% by weight of fat. A preferred powder comprises 70 to 90% by weight triglyceride of which at least 70% by weight is CLA. It has been found that use of the powder can give extra stability to the dressing. Preferably, the powder comprises at least 80% be weight, more preferably at least 90% by weight, most preferably at least 95% by weight, CLA or a derivative thereof.

The dressing compositions of the invention may be emulsions, such as oil-in-water or water-in-oil emulsions. They may separate out into different phases, or may be prepared so that they remain as an emulsion.

Preferably, the dressing of the invention is a low calorie product. For example, the dressing may have an energy content of less than 100 kcal /100g, more preferably less than 80 kcal/100g, even more preferably from 55 to 75kcal/100g. Calorie contents can be determined by methods well known to those skilled in the art, for example, as set out in Mullan, 2006, Labelling Determination of the Energy Content of Food: http://www.dairysciencs.info/energy_labe1.asp#3 and/or FRO Food And Nutrition Paper 77, Food energy - methods of analysis and conversion factors, Report of a Technical Workshop, Rome, 3-6 December 2002, Food And Agriculture Organization of the United Nations, Rome, 2003, ISBN 92-5-105014-7.

Dressing compositions of the invention may be prepared to give a wide variety of different types of dressings. Dressing compositions of the invention may be prepared to give known types of dressings such as Ranch dressing, Italian dressing, blue cheese dressing, Thousand Island dressing and French dressings. Ranch dressing and Italian dressings are most preferred.

Ranch dressings generally compute buttermilk or sour cream and other ingredients such as seasoning, garlic, mayonnaise and onions.

An Italian dressing generally comprises water, oil, lemon juice or vinegar, seasoning, garlic, onions and peppers.

A blue cheese dressing generally comprises blue cheese, mayonnaise, another ingredient such as garlic, seasoning, mustard, powder, lemon juice, vinegar, milk, sour cream and sugar.

Thousand Island dressing generally comprises mayonnaise and tomato ketchup, along with other ingredients including vegetable such as onions and peppers, another ingredient such as seasoning lemon juice, Worcestershire sauce and sugar.

French dressing generally comprises oil, and preferably olive oil, and vinegar, preferably red or white wine vinegar or lemon juice along with other ingredients such as seasoning, sugar, mustard and garlic. Other suitable types of salad dressings for the in the invention include caesar dressing and vinaigrette.

The compositions of the invention provide significant advantages in terms of weight management. The compositions have good taste and also good stability, both in their reparation and storage. Also, the composition of the invention can offer improved nutritional balance and are easy to use. The compositions in the invention can offer a consumer a nutritional benefit in terms of weight management, in particular a reduced tendency to fluctuation of body weight and to prevent stherosclerosis.

The listing or discussion of an apparently prior-published document in this specification should not necessarily be taken as an acknowledgement that the document is part of the state of the art or is common general knowledge.

The following non-limiting examples illustrate the invention and do not limit its scope in any way. In the examples and throughout this specification, all percentages, parts and ratios are by weight unless indicated otherwise.

### Examples

### Example 1

**Italian style dressing with Clarinol^{™}**

| **Ingredient** | **% by weight** |
|---|---|
| Vinegar | 21.0 |
| ClarinolTM G-95 (95% conjugated linoleic acid in triglyceride form) | 10.0 |
| Olive oil | 10.0 |
| Sugar | 4.0 |
| Salt | 2.4 |
| Garlic | 1.0 |
| Red bell peppers | 0.5 |
| Xanthan gum Grindsped® 80 (Danisco) | 0.5 |
| Onion | 0.4 |
| Garlic dried | 0.15 |
| Onion dried | 0.1 |
| Potassium sorbate | 0.1 |
| Parsley dried | 0.03 |
| Tomato paste | 0.1 |
| Armatto A-720-WS-AP (Chr. Hansen) | 0.007 |
| Caramel CA-45, 000C-WS (Chr. Hansen) | 0.007 |
| Calcium disodium EDTA | 0.0075 |
| Water till 100% | 49.7 |

The sugar, salt, potassium sorbate and EDTA are dissolved in warm water. The xarithan gum is dispersed in half of the vegetable oil and the oil-xanthan dispersion is slowly added to the water phase. Then the remaining peanut oil and the Clarinol^{™} G-95 are slowly added. Then the vinegar, all the vegetable, herbs and spices as well as the colourants are added to form the Italian style dressing with Clarinol™G-95.

### CLARINOL G-95

### Product Description

Clarinol™ G-95 is an oil high in isomers of Conjugated Linoleic Acid (CLA). The two main isomers present are cis-9, tans-11 (c9,t11) and trans-10, cis-12 (t10,c12) CLA, in a 50:50 ratio. Clarinol™ G-95 is made from natural safflower oil by a gentle, proprietary process.

**Technical Characteristics (typical valuers)**

| | |
|---|---|
| Free fatty acid as % oleic acid : | 0.7 |
| Peroxide value meq 02/kg: | 0.3 |
| Total CLA % : | 93 |
| c9,t11 + t10,c12 isomers % : | 89 |
| Trans fatty acids %: | 0.8 |
| Total saturated fatty acids % : | 0.5 |

## Claims

1. A dressing composition comprising a fat phase, said fat phase comprising at least 90% by weight conjugated linoleic acid or a derivative thereof (CLA) and wherein the dressing composition comprises from 15 to 60% by weight fat.

2. A dressing composition as claimed in Claim 1 wherein the fat phase comprises at least 95% by weight CLA.

3. A dressing composition as claimed in any preceding claim which comprises from 15 to 45% by weight fat

4. A dressing composition according to any preceding claim which comprises from 15 to 30% by weight fat.

5. A dressing composition according to any preceding claim selected from the group consisting of Ranch dressing, Italian dressing, blue cheese dressing, Thousand Island dressing and French dressing.

6. A dressing composition as claimed in any preceding claim which is a Ranch dressing or an Italian dressing.

7. A dressing composition as claimed in any preceding claim, wherein the dressing comprises vinegar.

8. A dressing composition as claimed in Claim 7, wherein the vinegar is balsamic vinegar.

9. A dressing composition as claimed in Claim 7 or 8 comprising from 2 to 55% by weight vinegar.

10. A dressing composition as claimed in any of the preceding claims, wherein the dressing further comprises a dairy based product.

11. A dressing composition as claimed in Claim 10, wherein the dairy based product is yoghurt.

12. A dressing composition as claimed in Claim 10, wherein the dairy based product is buttermilk.

13. A dressing composition as claimed in any of the preceding claims, wherein the dressing comprises mayonnaise.

14. A dressing composition as claimed in any of the preceding claims comprising a sweetener.

15. A dressing composition as claimed in any of the preceding claims comprising one or more additives selected from flavours, colouring agents, vitamins, acidity regulators, preservatives, emulsifiers, thickeners, antioxidants, dietary fibres and mixtures thereof.

16. A dressing composition as claimed in any of the preceding claims wherein the conjugated linoleic acid or a derivative thereof (CLA) is incorporated in the dressing composition in the form of a powder.

17. A process for producing a dressing composition of Claim 1, which comprises admixing a fat phase which comprises at least 90% by weight conjugated linoleic acid or a derivative thereof (CLA), with an aqueous phase to give the dressing composition.

18. A process according to claim 17, which further comprises the step of forming an emulsion of the fat phase with the aqueous phase.

19. A process according to claim 17 or 18, wherein the conjugated linoleic acid or a derivative thereof (CLA) is incorporated into the dressing composition in the form of a powder.

20. A process as claimed in Claim 19, wherein the powder is produced by spray drying the conjugated linoleic acid or its derivatives (CLA), or a fat comprising conjugated linoleic acid or its derivatives (CLA), with protein and/or carbohydrate.

21. Use of a dressing composition according to any of Claims 1 to 16 for a nutritional benefit.

22. A dressing composition as defined in any of claims 1 to 16 for use in a method for weight management effect.

23. A dressing composition as defined in any of claims 1 to 16 for use in a method for reducing tendency to fluctuation of body weight.

24. A dressing composition as defined in any of claims 1 to 16 for use in the prevention or treatrnent of atherosclerosis.

## Patentansprüche

1. Salatsoßenzusammensetzung, die eine Fettphase umfasst, wobei die Fettphase wenigstens 90 Gew.% konjugierte Linolensäure oder ein Derivat davon (CLA) umfasst und wobei die Salatsoßenzusammensetzung zwischen 15 und 60 Gew.% Fett umfasst.

2. Salatsoßenzusammensetzung wie in Anspruch 1 beansprucht, wobei die Fettphase wenigstens 95 Gew.% CLA umfasst.

3. Salatsoßenzusammensetzung wie in einem der vorherigen Ansprüche beansprucht, welche zwischen 15 und 45 Gew.% Fett umfasst.

4. Salatsoßenzusammensetzung nach einem der vorherigen Ansprüche, welche zwischen 15 und 30 Gew.% Fett umfasst.

5. Salatsoßenzusammensetzung nach einem der vorherigen Ansprüche, welche ausgewählt ist aus der Gruppe bestehend aus Ranchdressing, Italienischem Dressing, Blauschimmelkäsedressing, Thousand Island Dressing und Französischem Dressing.

6. Salatsoßenzusammensetzung wie in einem der vorherigen Ansprüche beansprucht, welche ein Ranchdressing oder ein Italienisches Dressing ist.

7. Salatsoßenzusammensetzung wie in einem der vorherigen Ansprüche beansprucht, wobei die Salatsoße Essig enthält.

8. Salatsoßenzusammensetzung wie in Anspruch 7 beansprucht, wobei der Essig Balsamessig ist.

9. Salatsoßenzusammensetzung wie in den Ansprüchen 7 oder 8 beansprucht, die zwischen 2 und 55 Gew.% Essig umfasst.

10. Salatsoßenzusammensetzung wie in einem der vorherigen Ansprüche beansprucht, wobei die Salatsoße ferner ein Produkt auf Milchbasis umfasst.

11. Salatsoßenzusammensetzung wie in Anspruch 10 beansprucht, wobei das Produkt auf Milchbasis Joghurt ist.

12. Salatsoßenzusammensetzung wie in Anspruch 10 beansprucht, wobei das Produkt auf Milchbasis Buttermilch ist.

13. Salatsoßenzusammensetzung wie in einem der vorherigen Ansprüche beansprucht, wobei die Salatsoße Mayonnaise umfasst.

14. Salatsoßenzusammensetzung wie in einem der vorherigen Ansprüche beansprucht, die einen Süßstoff umfasst.

15. Salatsoßenzusammensetzung wie in einem der vorherigen Ansprüche beansprucht, die einen oder mehrere Zusatzstoffe umfasst, ausgewählt aus Geschmacksstoffen, Farbstoffen, Vitaminen, Säureregulatoren, Konservierungsstoffen, Emulgatoren, Bindemitteln, Antioxidantien, Diätfasern und Gemischen davon.

16. Salatsoßenzusammensetzung wie in einem der vorherigen Ansprüche beansprucht, wobei die konjugierte Linolensäure oder ein Derivat davon (CLA) in Form eines Pulvers in der Salatsoßenzusammensetzung enthalten ist.

17. Verfahren zur Herstellung einer Salatsoßenzusammensetzung nach Anspruch 1, welches das Vereinigen einer Fettphase, die wenigstens 90 Gew.% konjugierte Linolensäure oder ein Derivat davon (CLA) umfasst, mit einer wässrigen Phase umfasst, wodurch die Salatsoßenzusammensetzung entsteht.

18. Verfahren nach Anspruch 17, das ferner den Schritt des Bildens einer Emulsion der Fettphase mit der wässrigen Phase umfasst.

19. Verfahren nach Anspruch 17 oder 18, wobei die konjugierte Linolensäure oder ein Derivat davon (CLA) in Form eines Pulvers in der Salatsoßenzusammensetzung enthalten ist.

20. Verfahren wie in Anspruch 19 beansprucht, wobei das Pulver durch Sprühtrocknen der konjugierten Linolensäure oder deren Derivate (CLA) oder eines Fettes, das konjugierte Linolensäure oder deren Derivate (CLA) umfasst, mit Protein und/oder Kohlenhydrat hergestellt wird.

21. Verwendung einer Salatsoßenzusammensetzung nach einem der Ansprüche 1 bis 16 für einen ernährungsphysiologischen Nutzen.

22. Salatsoßenzusammensetzung wie in einem der Ansprüche 1 bis 16 definiert zur Verwendung in einer Methode für einen Gewichtskontrolleffekt.

23. Salatsoßenzusammensetzung wie in einem der Ansprüche 1 bis 16 definiert zur Verwendung in einer Methode zur Verminderung der Tendenz zur Körpergewichtsschwankung.

24. Salatsoßenzusammensetzung wie in einem der Ansprüche 1 bis 16 definiert zur Verwendung in einer Methode zur Vorbeugung oder Behandlung von Arteriosklerose.

## Revendications

1. Composition d'assaisonnement comprenant une phase grasse, ladite phase grasse comprenant au moins 90 % en poids d'acide linoléique conjugué ou d'un dérivé de celui-ci (CLA) et la composition d'assaisonnement comprenant de 15 à 60 % en poids de matière grasse.

2. Composition d'assaisonnement selon la revendication 1, dans laquelle la phase grasse comprend au moins 95 % en poids de CLA.

3. Composition d'assaisonnement selon l'une quelconque des revendications précédentes qui comprend de 15 à 45 % en poids de matière grasse.

4. Composition d'assaisonnement selon l'une quelconque des revendications précédentes qui comprend de 15 à 30 % en poids de matière grasse.

5. Composition d'assaisonnement selon l'une quelconque des revendications précédentes, choisie dans le groupe constitué par une sauce Ranch, une vinaigrette italienne, une sauce au bleu, une sauce Thousand Island et une vinaigrette française.

6. Composition d'assaisonnement selon l'une quelconque des revendications précédentes qui est une sauce Ranch ou une vinaigrette italienne.

7. Composition d'assaisonnement selon l'une quelconque des revendications précédentes, dans laquelle l'assaisonnement comprend du vinaigre.

8. Composition d'assaisonnement selon la revendication 7, dans laquelle le vinaigre est un vinaigre balsamique.

9. Composition d'assaisonnement selon la revendication 7 ou 8, comprenant de 2 à 55 % en poids de vinaigre.

10. Composition d'assaisonnement selon l'une quelconque des revendications précédentes, dans laquelle l'assaisonnement comprend en outre un produit à base de lait.

11. Composition d'assaisonnement selon la revendication 10, dans laquelle le produit à base de lait est un yaourt.

12. Composition d'assaisonnement selon la revendication 10, dans laquelle le produit à base de lait est un babeurre.

13. Composition d'assaisonnement selon l'une quelconque des revendications précédentes, dans laquelle l'assaisonnement comprend une mayonnaise.

14. Composition d'assaisonnement selon l'une quelconque des revendications précédentes, comprenant un édulcorant.

15. Composition d'assaisonnement selon l'une quelconque des revendications précédentes, comprenant un ou plusieurs additifs choisis parmi les agents aromatisants, les agents colorants, les vitamines, les régulateurs d'acidité, les conservateurs, les émulsifiants, les épaississants, les antioxydants, les fibres alimentaires et des mélanges de ceux-ci.

16. Composition d'assaisonnement selon l'une quelconque des revendications précédentes, dans laquelle l'acide linoléique conjugué ou d'un dérivé de celui-ci (CLA) est incorporé dans la composition d'assaisonnement sous la forme d'une poudre.

17. Procédé de production d'une composition d'assaisonnement selon la revendication 1, qui comprend le mélange d'une phase grasse qui comprend au moins 90 % en poids d'acide linoléique conjugué ou d'un dérivé de celui-ci (CLA), avec une phase aqueuse pour donner la composition d'assaisonnement.

18. Procédé selon la revendication 17, comprenant en outre l'étape de formation d'une émulsion de la phase grasse avec la phase aqueuse.

19. Procédé selon la revendication 17 ou 18, dans lequel l'acide linoléique conjugué ou un dérivé de celui-ci (CLA) est incorporé dans la composition d'assaisonnement sous la forme d'une poudre.

20. Procédé selon la revendication 19, dans lequel la poudre est produite par séchage par pulvérisation de l'acide linoléique conjugué ou de dérivés de celui-ci (CLA), ou d'une matière grasse comprenant un acide linoléique conjugué ou des dérivés de celui-ci(CLA), avec une protéine et/ou un glucide.

21. Utilisation d'une composition d'assaisonnement selon l'une quelconque des revendications 1 à 16, pour un bénéfice nutritionnel.

22. Composition d'assaisonnement selon l'une quelconque des revendications 1 à 16, pour une utilisation dans un procédé de gestion du poids.

23. Composition d'assaisonnement selon l'une quelconque des revendications 1 à 16, pour une utilisation dans un procédé de réduction de la tendance à la fluctuation du poids corporel.

24. Composition d'assaisonnement selon l'une quelconque des revendications 1 à 16, pour une utilisation dans la prévention ou le traitement de l'athérosclérose.
